# EUROPEAN PATENT APPLICATION

(11) **EP 4 175 127 A1**
(43) Date of publication of application: **03.05.2023**
(21) Application number: 21833873.9
(22) Date of filing: 14.06.2021
(51) Int. Cl.: H02K 3/38, H02K 3/34, H02K 15/10

(54) **MOTOR**

(30) Priority: 03.07.2020 JP 2020115648
(71) Applicant: DMG Mori Co., Ltd., Yamatokoriyama-shi, Nara 639-1160 (JP)
(72) Inventor: HIROTA, Satoshi, Yamatokoriyama-shi, Nara 639-1160 (JP)
(74) Representative: Isarpatent
(86) International application number: PCT/JP2021/022460
(87) International publication number: WO 2022/004338

(57) **Abstract**

A motor includes three-phase coils formed of coils of different phases and including a first coil end (61) and a second coil end (71) arranged side by side in a circumferential direction of a stator core (21). The first coil end (61) and the second coil end (71) have a first facing portion (62) and a second facing portion (72), respectively. The motor includes an interphase insulator (51) provided only on the first facing portion (62) among the first facing portion (62) and the second facing portion (72). Each of the first coil end (61) and the second coil end (71) is formed of a plurality of coils of the same phase that protrude onto an end face (26) from a plurality of slots (24) arranged side by side continuously in the circumferential direction of the stator core (21). The first facing portion (62) corresponds to all of the plurality of coils forming the first coil end (61), and the second facing portion (72) corresponds to all of the coils forming the second coil end (71).

## Description

### TECHNICAL FIELD

The present invention relates to a motor.

### BACKGROUND ART

For example, Japanese Patent Laying-Open No. 2012-65423 (PTL 1) discloses a rotating electric machine including: a stator core; and a U-phase coil, a V-phase coil, and a W-phase coil that are disposed in the stator core in a distributed winding manner. Also, in a coil end portion protruding from an axial end face of the stator core, collected wires forming each phase coil are covered with an insulating layer.

### CITATION LIST

### PATENT LITERATURE

PTL 1: Japanese Patent Laying-Open No. 2012-65423

### SUMMARY OF INVENTION

### TECHNICAL PROBLEM

In the rotating electric machine disclosed in the above-mentioned PTL 1, an insulating layer is provided correspondingly on each of the U-phase coil, the V-phase coil, and the W-phase coil in order to ensure interphase insulation at the coil end portion. Such a configuration, however, increases the number of portions where an insulating layer is provided, which causes concern that the manufacturing process may become complicated or the manufacturing cost may increase.

Thus, the present invention has been made to solve the above-described problems, and an object of the present invention is to provide a motor that allows reliable insulation between phases at coil ends while reducing the number of portions where the interphase insulator is provided.

### SOLUTION TO PROBLEM

A motor according to one aspect of the present invention includes: a stator core including a yoke portion having an annular shape, and a plurality of tooth portions extending radially from the yoke portion and arranged at a distance from each other in a circumferential direction, the stator core being provided with a slot between the tooth portions adjacent to each other; and three-phase coils inserted through the slot and wound around each of the tooth portions. The three-phase coils include a first coil end and a second coil end arranged side by side in a circumferential direction of the stator core, the first coil end and the second coil end being formed of coils of different phases, the coils of different phases protruding from the slot onto an end face of the stator core in an axial direction of the stator core. The first coil end and the second coil end include a first facing portion and a second facing portion, respectively, that face each other. The motor further includes an interphase insulator provided only on the first facing portion among the first facing portion and the second facing portion. Each of the first coil end and the second coil end is formed of a plurality of coils of the same phase, the coils of the same phase protruding onto the end face from a plurality of the slots arranged side by side continuously in the circumferential direction of the stator core. The first facing portion corresponds to all of the coils forming the first coil end. The second facing portion corresponds to all of the coils forming the second coil end.

The motor according to another aspect of the present invention includes: a stator core including a yoke portion having an annular shape, and a plurality of tooth portions extending radially from the yoke portion and arranged at a distance from each other in a circumferential direction, the stator core being provided with a slot between the tooth portions adjacent to each other; and three-phase coils inserted through the slot and wound around each of the tooth portions. The three-phase coils include a first coil end and a second coil end arranged side by side in a circumferential direction of the stator core, the first coil end and the second coil end being formed of coils of different phases, the coils of different phases protruding from the slot onto an end face of the stator core in an axial direction of the stator core. The first coil end and the second coil end include a first facing portion and a second facing portion, respectively, that face each other. The motor further includes an interphase insulator provided on the first facing portion among the first facing portion and the second facing portion.

According to the motor configured as described above, providing the interphase insulator in the first facing portion allows reliable insulation between phases of the first coil end and the second coil end. At this time, since the interphase insulator is provided in the first facing portion among the first facing portion and the second facing portion, the number of portions where the interphase insulator is provided can be reduced.

Further preferably, a maximum height from the end face to the second facing portion in the axial direction of the stator core is greater than a maximum height from the end face to the first facing portion in the axial direction of the stator core.

According to the motor configured as described above, the second facing portion is not hidden by the first facing portion, so that contact between the coils having different phases and provided with no interphase insulator can be more reliably prevented.

Further preferably, each of the first coil end and the second coil end is formed of a plurality of coils of the same phase, the coils of the same phase protruding onto the end face from a plurality of the slots arranged side by side continuously in the circumferential direction of the stator core.

According to the motor configured as described above, providing the interphase insulator in the first facing portion allows reliable insulation between the phases of: the first coil end formed of a plurality of coils of the same phase; and the second coil end formed of a plurality of coils of the same phase that is different from the phase of the coils of the first coil end.

Further preferably, the first facing portion corresponds to a coil adjacent to the second coil end among the plurality of coils forming the first coil end. The second facing portion corresponds to a coil adjacent to the first coil end among the plurality of coils forming the second coil end.

According to the motor configured as described above, providing the interphase insulator in the first facing portion corresponding to the coil adjacent to the second coil end among the plurality of coils forming the first coil end allows reliable insulation between the phases of the first coil end and the second coil end.

Further preferably, the first facing portion corresponds to all of the coils forming the first coil end. The second facing portion corresponds to all of the coils forming the second coil end.

According to the motor configured as described above, providing the interphase insulator in the first facing portion corresponding to all of the plurality of coils forming the first coil end allows reliable insulation between the phases of the first coil end and the second coil end.

Further preferably, the coils forming each of the first coil end and the second coil end extend in the circumferential direction and a radial direction of the stator core when viewed in the axial direction of the stator core.

According to the motor configured as described above, the section where the first facing portion and the second facing portion face each other is relatively long, and thereby, the effect of reducing the number of portions where an interphase insulator is provided is more effectively achieved.

Further preferably, the interphase insulator is an insulating tape wound around each of the coils.

According to the motor configured as described above, the number of portions where the interphase insulator is provided is relatively small, and thereby, the operation to wind the insulating tape around each coil can be simplified.

### ADVANTAGEOUS EFFECTS OF INVENTION

As described above, according to the present invention, it is possible to provide a motor allowing reliable insulation between phases at coil ends while reducing the number of portions where an interphase insulators is provided.

### BRIEF DESCRIPTION OF DRAWINGS

Fig. 1 is a perspective view showing a motor according to a first embodiment of the present invention.
Fig. 2 is a cross-sectional view showing the motor shown in Fig. 1.
Fig. 3 is a perspective view showing the motor shown in Fig. 1 from which a flange, a resin sealing portion, and wires have been removed.
Fig. 4 is an enlarged perspective view of a region surrounded by a two-dot chain line IV in Fig. 3.
Fig. 5 is a diagram for illustrating a state in which coils are mounted in the motor shown in Fig. 1.
Fig. 6 is a cross-sectional view of the motor as seen in the direction indicated by an arrow line VI-VI in Fig. 5.
Fig. 7 is a diagram for illustrating a modification of the state in which the coils are mounted in Fig. 5.
Fig. 8 is a diagram for illustrating a state in which coils are mounted in a motor according to a second embodiment of the present invention.
Fig. 9 is a diagram for illustrating a modification of the state in which the coils are mounted in Fig. 8.
Fig. 10 is a diagram for illustrating a state in which coils are mounted in a motor according to a third embodiment of the present invention.

### DESCRIPTION OF EMBODIMENTS

Embodiments of the present invention will be hereinafter described with reference to the accompanying drawings. In the accompanying drawings referred to below, the same or corresponding members are denoted by the same reference characters.

### (First Embodiment)

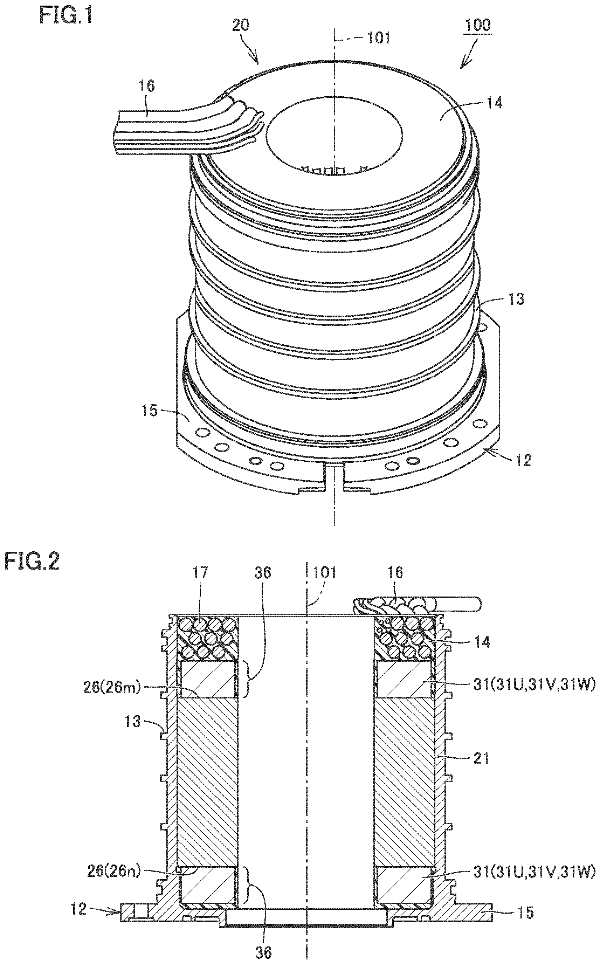

Fig. 1 is a perspective view showing a motor according to the first embodiment of the present invention. Fig. 2 is a cross-sectional view showing the motor shown in Fig. 1.

Referring to Figs. 1 and 2, a motor 100 according to the present embodiment is used for a machine tool. Motor 100 is used as a motor incorporated in a tool rest of a combined processing machine and for rotating a rotating tool mounted on the tool rest.

Motor 100 includes a rotor (not shown) and a stator 20 disposed on the outer circumference of the rotor with a gap interposed therebetween. The rotor is driven to rotate about a central axis 101 shown as an imaginary line.

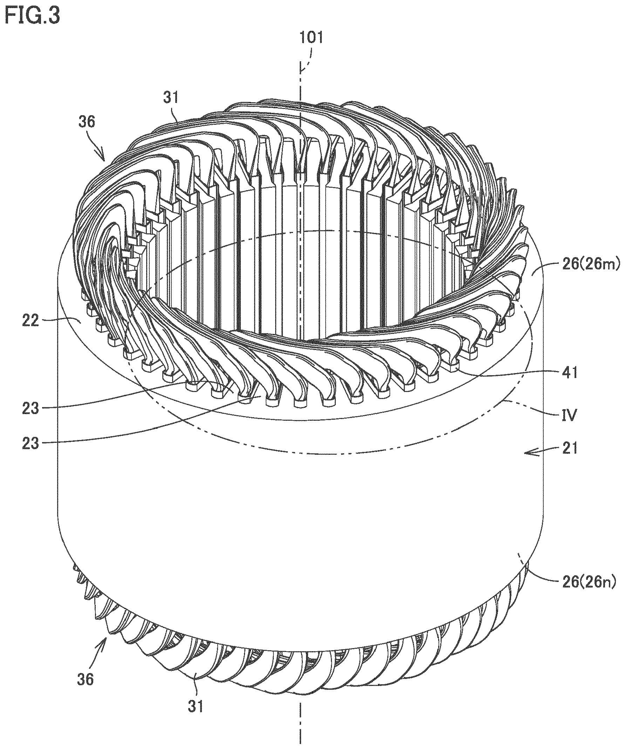

Fig. 3 is a perspective view showing the motor shown in Fig. 1 from which a flange, a resin sealing portion, and wires (lead wires 16 and crossover wires 17 in Fig. 2) have been removed.

Referring to Figs. 1 to 3, stator 20 includes a stator core 21, a flange (cylindrical body) 12, three-phase coils 31 (31U, 31V, 31W), and a resin sealing portion 14.

Stator core 21 is formed of a magnetic material. Stator core 21 entirely has a cylindrical shape centered around central axis 101. The circumferential direction of central axis 101 corresponds to the circumferential direction of stator core 21, the axial direction of central axis 101 corresponds to the axial direction of stator core 21, and the radial direction of central axis 101 corresponds to the radial direction of stator core 21.

Stator core 21 has end faces 26 (26m, 26n). Each end face 26 is disposed at an end of stator core 21 in the axial direction of central axis 101. End face 26 extends in a plane orthogonal to central axis 101. End face 26m and end face 26n are disposed at one end and the other end, respectively, of stator core 21 in the axial direction of central axis 101.

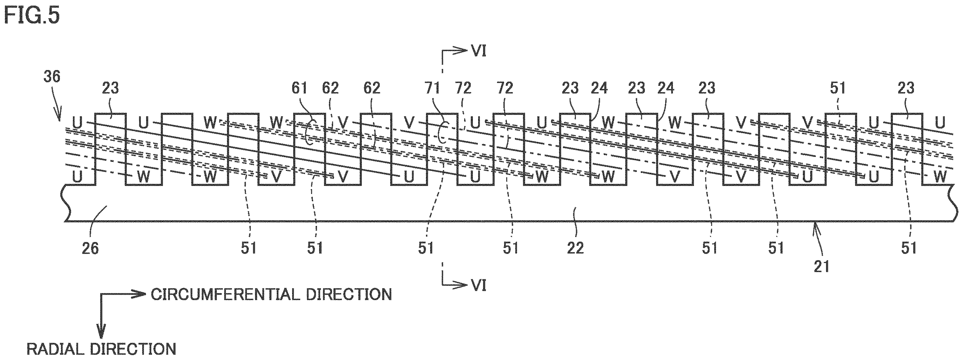

Stator core 21 is formed of components including a yoke portion 22 and a plurality of tooth portions 23. Yoke portion 22 is formed to extend in an annular shape around central axis 101. Yoke portion 22 has a cylindrical shape centered around central axis 101. Tooth portions 23 each have a shape extending radially inward from yoke portion 22. Each tooth portion 23 faces the rotor with a gap interposed therebetween at the distal end of tooth portion 23 extending from yoke portion 22. The plurality of tooth portions 23 are spaced apart from each other in the circumferential direction centered around central axis 101. A slot 24 (see Fig. 5 described later) is provided between tooth portions 23 adjacent to each other in the circumferential direction.

Flange 12 entirely has a cylindrical shape centered around central axis 101. Flange 12 is made of metal. Stator core 21 is fitted inside flange 12.

Flange 12 is formed of components including a refrigerant passage forming portion 13 and a collar portion 15. Refrigerant passage forming portion 13 is provided on the outer circumferential surface of flange 12. Together with a cylindrical member (not shown) disposed on the outer circumference of flange 12, refrigerant passage forming portion 13 forms a refrigerant passage through which refrigerant such as cooling water or cooling oil can flow. Collar portion 15 is provided to extend in a flange shape at an end of flange 12 in the axial direction of central axis 101. Collar portion 15 is provided with a hole through which a bolt is inserted for fixing motor 100.

Three-phase coils 31 are provided in stator core 21. Three-phase coils 31 are inserted through each slot 24. Three-phase coils 31 are wound around each tooth portion 23.

Three-phase coils 31 include a U-phase coil 31U, a V-phase coil 31V, and a W-phase coil 31W. The coil of each of U-phase coil 31U, V-phase coil 31V, and W-phase coil 31W is formed of a plurality of bundled conductive wires (for example, copper wires).

The coil of each of U-phase coil 31U, V-phase coil 31V, and W-phase coil 31W is wound around tooth portion 23 by distributed winding. The coil of each of U-phase coil 31U, V-phase coil 31V, and W-phase coil 31W is provided so as to straddle at least one slot 24. The coil of each of U-phase coil 31U, V-phase coil 31V, and W-phase coil 31W is wound around tooth portions 23 so as to pass through two slots 24 located apart from each other in the circumferential direction of stator core 21 and also extend over end faces 26 (26m, 26n).

The coil of each of U-phase coil 31U, V-phase coil 31V, and W-phase coil 31W extends inside slot 24 linearly in the axial direction of central axis 101. An in-slot insulator 41 for insulating three-phase coils 31 from stator core 21 is provided inside slot 24.

When viewed from the outside to the inside in the radial direction of central axis 101, the coil of each of U-phase coil 31U, V-phase coil 31V, and W-phase coil 31W extends on end face 26 so as to be curved in a substantially U-shape. When viewed in the axial direction of central axis 101, the coil of each of U-phase coil 31U, V-phase coil 31V, and W-phase coil 31W extends on end face 26 in the circumferential direction of central axis 101 and in the radial direction of central axis 101. Inside each slot 21, two sets of coils selected from U-phase coil 31U, V-phase coil 31V, and W-phase coil 31W are arranged side by side in the radial direction of central axis 101. These two sets of coils arranged inside each slot 21 may be coils of the same phase or may be coils of different phases.

Three-phase coils 31 (31U, 31V, 31W) extending on end face 26 constitute a coil end portion 36. Coil end portion 36 protrudes from slot 24 onto end face 26 in the axial direction of central axis 101.

Resin sealing portion 14 is formed of a resin material. Resin sealing portion 14 is provided so as to fill slot 24. Resin sealing portion 14 is provided on end face 26 so as to cover coil end portion 36.

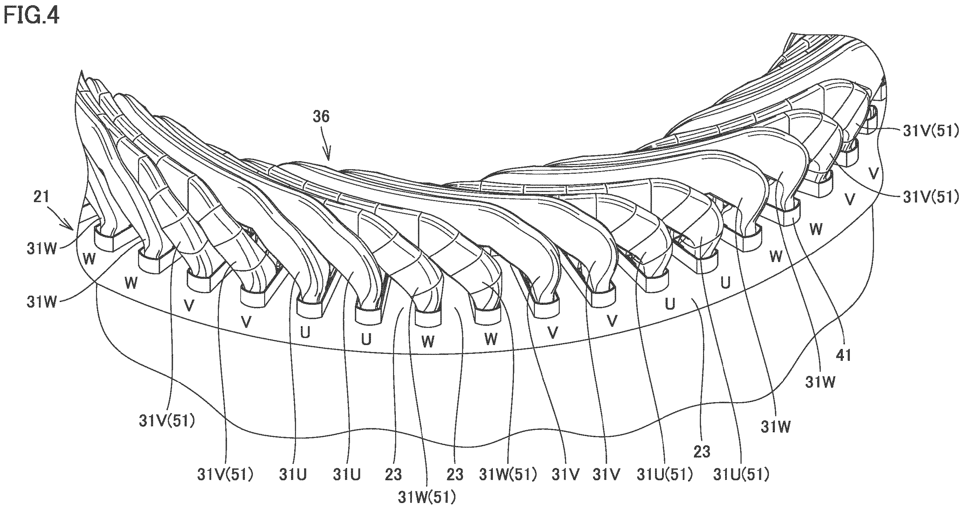

Fig. 4 is an enlarged perspective view of a region surrounded by a two-dot chain line IV in Fig. 3. Fig. 5 is a diagram for illustrating the state in which coils are mounted in the motor shown in Fig. 1.

Fig. 5 schematically shows end face 26 of stator core 21 developed linearly and three-phase coils 31 (coil end portion 36) disposed on end face 26. In Fig. 5, U-phase coil 31U is indicated by a solid line, V-phase coil 31V is indicated by a two-dot chain line, W-phase coil 31W is indicated by a one-dot chain line, and an interphase insulator 51 (described later) is indicated by a dotted line.

Referring to Figs. 4 and 5, on end face 26, the coil of each of U-phase coil 31U, V-phase coil 31V, and W-phase coil 31W is provided so as to straddle four slots 24 in the circumferential direction of central axis 101. Two sets of U-phase coils 31U are arranged side by side continuously in the circumferential direction of central axis 101, two sets of V-phase coils 31V are arranged side by side continuously in the circumferential direction of central axis 101, and two sets of W-phase coils 31W are arranged side by side continuously in the circumferential direction of central axis 101. The two sets of U-phase coils 31U, the two sets of V-phase coils 31V, and the two sets of W-phase coils 31W are arranged in this order repeatedly in the circumferential direction of central axis 101.

Three-phase coils 31 (coil end portion 36) include a first coil end 61 and a second coil end 71.

The coils forming first coil end 61 are difference in phase from the coils forming second coil end 71. First coil end 61 and second coil end 71 may be provided as a set of U-phase coil 31U and V-phase coil 31V (in no particular order), a set of V-phase coil 31V and W-phase coil 31W (in no particular order), or a set of W-phase coil 31W and U-phase coil 31U (in no particular order). First coil end 61 and second coil end 71 are arranged side by side in the circumferential direction of central axis 101. First coil end 61 and second coil end 71 are arranged side by side continuously in the circumferential direction of central axis 101.

Each of first coil end 61 and second coil end 71 is formed of a plurality of coils of the same phase that protrude onto end face 26 from the plurality of slots 24 arranged side by side continuously in the circumferential direction of central axis 101.

First coil end 61 has a first facing portion 62. Second coil end 71 has a second facing portion 72. First facing portion 62 and second facing portion 72 face each other. First facing portion 62 and second facing portion 72 face each other in the circumferential direction of central axis 101 and also in the radial direction of central axis 101.

First facing portion 62 and second facing portion 72 are adjacent to each other. No other coils exist between first facing portion 62 and second facing portion 72 except for first facing portion 62 and second facing portion 72.

First facing portion 62 corresponds to all of the plurality of coils forming first coil end 61. Second facing portion 72 corresponds to all of the plurality of coils forming second coil end 71.

Motor 100 further includes an interphase insulator 51. Interphase insulator 51 is provided in first facing portion 62 among first facing portion 62 and second facing portion 72.

Interphase insulator 51 is provided so as to insulate the coils of different phases from each other in coil end portion 36 on end face 26. Interphase insulator 51 is provided so as to cover first facing portion 62. Interphase insulator 51 is interposed between first facing portion 62 and second facing portion 72. Interphase insulator 51 is made of an insulating tape and wound around first facing portion 62. As interphase insulator 51, for example, Kapton (registered trademark) that is a polyimide film can be used.

In Fig. 5, first coil end 61 corresponds to two sets of W-phase coils 31W arranged side by side continuously in the circumferential direction of central axis 101, and second coil end 71 corresponds to two sets of V-phase coils 31V arranged side by side continuously in the circumferential direction of central axis 101 and arranged side by side with the two sets of W-phase coils 31W in the circumferential direction of central axis 101. First facing portion 62 corresponds to the two sets of W-phase coils 31W forming first coil end 61, and second facing portion 72 corresponds to the two sets of V-phase coils 31V forming second coil end 71.

Interphase insulator 51 is provided in the two sets of W-phase coils 31W corresponding to first facing portion 62 among the two sets of W-phase coils 31W corresponding to first facing portion 62 and the two sets of V-phase coils 31V corresponding to second facing portion 72. Interphase insulator 51 is not provided in the two sets of V-phase coils 31V corresponding to second facing portion 72.

Note that the above-mentioned set of first coil end 61 and second coil end 71 is described as a typical example, in which a plurality of sets of first coil ends 61 and second coil ends 71 are arranged side by side in the circumferential direction of central axis 101, in which each of the sets includes first coil end 61 having first facing portion 62 provided with interphase insulator 51 and second coil end 71 having second facing portion 72 not provided with interphase insulator 51.

According to the configuration as described above, providing interphase insulator 51 in first facing portion 62 allows reliable insulation between the phases of first coil end 61 and second coil end 71 that are formed of coils of different phases.

Further, in coil end portion 36, the space factor of the conductive wires occupying the space on end face 26 is relatively high, which makes it difficult to wind the insulating tape around all the coils of three-phase coils 31. Further, it is also conceivable to perform an assembling step of mounting coils in stator core 21 after providing the insulating tape on coil end portion 36. In this case, however, each conductive wire around which the insulating tape is wound is less deformable, which makes it significantly difficult to mount the coils in stator core 21. In contrast, in the present embodiment, interphase insulator 51 (an insulating tape) is provided on first facing portion 62 among first facing portion 62 and second facing portion 72, so that the number of portions where interphase insulator 51 is provided can be reduced. Thereby, the operation to wind the insulating tape around coil end portion 36 can be readily performed. Further, since the consumption of interphase insulator 51 (insulating tape) can also be reduced, the manufacturing cost for motor 100 can be reduced.

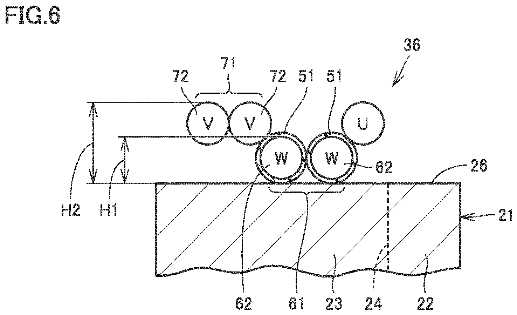

Fig. 6 is a cross-sectional view showing a coil end portion. Fig. 6 shows a cross-sectional shape of motor 100 (stator core 21, three-phase coils 31, and interphase insulator 51) as viewed along a line VI-VI in Fig. 5. Fig. 6 shows a cross-sectional shape of motor 100 viewed when motor 100 is cut along a plane including central axis 101.

Referring to Figs. 5 and 6, a maximum height H2 from end face 26 to second facing portion 72 in the axial direction of central axis 101 is greater than a maximum height H1 from end face 26 to first facing portion 62 in the axial direction of central axis 101 (H2 > H1).

First facing portion 62 and second facing portion 72 are provided at positions displaced from each other in the axial direction of central axis 101. First facing portion 62 is provided immediately above end face 26. Second facing portion 72 is stacked on second facing portion 72 on end face 26. Second facing portion 72 is located farther from end face 26 than first facing portion 62 in the axial direction of central axis 101.

In coil end portion 36, the space factor of the conductive wires occupying the space on end face 26 is relatively high, and thus, the coils forming coil end portion 36 may be stacked one on another in the vertical direction. In such a case, one coil provided immediately above end face 26 is blocked by another coil stacked on the one coil. Thus, the coils of different phases provided immediately above end face 26 may unintentionally come into contact with each other, which may cause phase-to-phase short circuit.

On the other hand, in the present embodiment, according to the above-mentioned relational expression of H2 > H1, first facing portion 62 provided with interphase insulator 51 is provided immediately above end face 26, and then, second facing portion 72 not provided with interphase insulator 51 is stacked on this first facing portion 62. Such a configuration can more reliably prevent contact between the coils of different phases (V-phase coil 31V and U-phase coil 31U at the cross-sectional position shown in Fig. 6), each of the coils being not provided with interphase insulator 51.

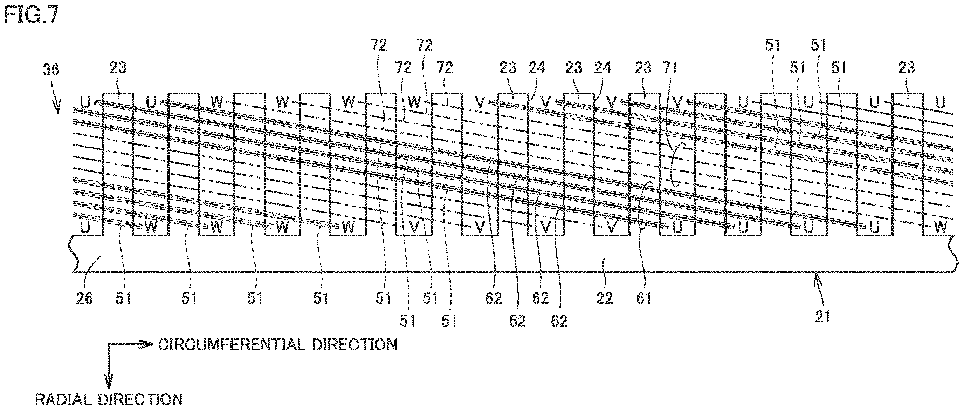

Fig. 7 is a diagram for illustrating a modification of the state in which the coils are mounted in Fig. 5. Referring to Fig. 7, in the present modification, on end face 26, the coils of each of U-phase coils 31U, V-phase coils 31V, and W-phase coils 31W are provided so as to straddle ten slots 24 in the circumferential direction of central axis 101. Four sets of U-phase coils 31U are arranged side by side continuously in the circumferential direction of central axis 101, four sets of V-phase coils 31V are arranged side by side continuously in the circumferential direction of central axis 101, and four sets of W-phase coils 31W are arranged side by side continuously in the circumferential direction of central axis 101. The four sets of U-phase coils 31U, the four sets of V-phase coils 31V, and the four sets of W-phase coils 31W are arranged in this order repeatedly in the circumferential direction of central axis 101.

In Fig. 7, as a representative example, first coil end 61 corresponds to the four sets of U-phase coils 31U arranged side by side continuously in the circumferential direction of central axis 101, and second coil end 71 corresponds to the four sets of W-phase coils 31W arranged side by side continuously in the circumferential direction of central axis 101 and also arranged side by side with the four sets of U-phase coils 31U in the circumferential direction of central axis 101. First facing portion 62 corresponds to the four sets of U-phase coils 31U forming first coil end 61, and second facing portion 72 corresponds to the four sets of W-phase coils 31W forming second coil end 71.

Interphase insulator 51 is provided in the four sets of U-phase coils 31U corresponding to first facing portion 62 among the four sets of U-phase coils 31U corresponding to first facing portion 62 and the four sets of W-phase coils 31W corresponding to second facing portion 72. Interphase insulator 51 is not provided in the four sets of W-phase coils 31W corresponding to second facing portion 72.

As shown in the present modification, the number of coils of the same phase arranged side by side continuously in the circumferential direction of central axis 101 is not particularly limited.

The following is a summary of the structure of motor 100 according to the first embodiment of the present invention as described above. Specifically, motor 100 according to the present embodiment includes: stator core 21 including yoke portion 22 having an annular shape and a plurality of tooth portions 23 extending radially from yoke portion 22 and arranged at a distance from each other in the circumferential direction, stator core 21 being provided with slot 24 between tooth portions 23 adjacent to each other; and three-phase coils 31 inserted through slot 24 and wound around each of tooth portions 23. Three-phase coils 31 include first coil end 61 and second coil end 71 arranged in the circumferential direction of stator core 21, first coil end 61 and second coil end 71 being formed of coils of different phases, the coils of different phases protruding from slot 24 onto end face 26 of stator core 21 in the axial direction of stator core 21. First coil end 61 and second coil end 71 include first facing portion 62 and second facing portion 72, respectively, that face each other. Motor 100 further includes interphase insulator 51 provided on first facing portion 62 among first facing portion 62 and second facing portion 72.

According to motor 100 in the first embodiment of the present invention configured as described above, the coils of different phases in coil end portion 36 can be reliably insulated from each other while reducing the number of portions where interphase insulator 51 is provided.

Although inner rotor-type motor 100 having a rotor disposed inside stator 20 has been described in the present embodiment, the present invention is also applicable to an outer rotor-type motor having a rotor disposed outside the stator. The present invention is also applicable to a motor for driving a spindle of a machine tool or a motor for swiveling a table of a machine tool.

### (Second Embodiment)

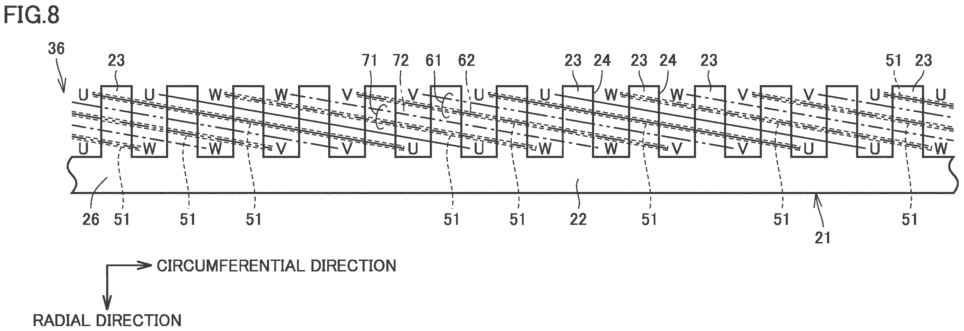

Fig. 8 is a diagram for illustrating the state in which coils are mounted in a motor according to the second embodiment of the present invention. The motor according to the present embodiment has basically the same structure as that of motor 100 according to the first embodiment. In the following, the description of the same structure will not be repeated.

In the first embodiment shown in Fig. 5, first facing portion 62 corresponds to all of the plurality of coils forming first coil end 61. Referring to Fig. 8, on the other hand, in the present embodiment, first facing portion 62 corresponds to the coil adjacent to second coil end 71 among the plurality of coils forming first coil end 61. In the first embodiment shown in Fig. 5, second facing portion 72 corresponds to all of the plurality of coils forming second coil end 71. In the present embodiment, on the other hand, second facing portion 72 corresponds to the coil adjacent to first coil end 61 among the plurality of coils forming second coil end 71.

In Fig. 8, as a representative example, first coil end 61 corresponds to two sets of V-phase coils 31V arranged side by side continuously in the circumferential direction of central axis 101, and second coil end 71 corresponds to two sets of W-phase coils 31W arranged side by side continuously in the circumferential direction of central axis 101 and also arranged side by side with the two sets of V-phase coils 31V in the circumferential direction of central axis 101. First facing portion 62 corresponds to one set of V-phase coils 31V adjacent to second coil end 71 among the two sets of V-phase coils 31V forming first coil end 61. Second facing portion 72 corresponds to one set of W-phase coils 31W adjacent to first coil end 61 among the two sets of W-phase coils 31W forming second coil end 71.

Interphase insulator 51 is provided in one set of V-phase coils 31V corresponding to first facing portion 62 among one set of V-phase coils 31V corresponding to first facing portion 62 and one set of W-phase coils 31W corresponding to second facing portion 72. Interphase insulator 51 is not provided in other coils (one set of V-phase coils 31V) except for first facing portion 62 in first coil end 61. Interphase insulator 51 is not provided in one set of W-phase coils 31W corresponding to second facing portion 72.

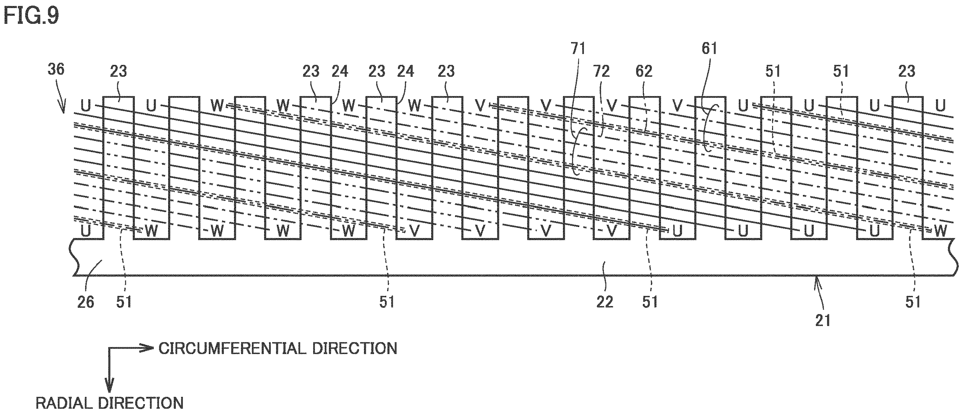

Fig. 9 is a diagram for illustrating a modification of the state in which the coils are mounted in Fig. 8. Referring to Fig. 9, in the present modification, the coils of each of U-phase coils 31U, V-phase coils 31V, and W-phase coils 31W are provided on end face 26 so as to straddle ten slots 24 in the circumferential direction of central axis 101. Four sets of U-phase coils 31U are arranged side by side continuously in the circumferential direction of central axis 101, four sets of V-phase coils 31V are arranged side by side continuously in the circumferential direction of central axis 101, and four sets of W-phase coils 31W are arranged side by side continuously in the circumferential direction of central axis 101. The four sets of U-phase coils 31U, the four sets of V-phase coils 31V, and the four sets of W-phase coils 31W are arranged in this order repeatedly in the circumferential direction of central axis 101.

In Fig. 9, as a representative example, first coil end 61 corresponds to the four sets of V-phase coils 31V arranged side by side continuously in the circumferential direction of central axis 101, and second coil end 71 corresponds to the four sets of W-phase coils 31W arranged side by side continuously in the circumferential direction of central axis 101 and also arranged side by side with the four sets of V-phase coils 31V in the circumferential direction of central axis 101. First facing portion 62 corresponds to one set of V-phase coils 31V adjacent to second coil end 71 among the four sets of V-phase coils 31V forming first coil end 61. Second facing portion 72 corresponds to one set of W-phase coils 31W adjacent to first coil end 61 among the four sets of W-phase coils 31W forming second coil end 71.

Interphase insulator 51 is provided in one set of V-phase coils 31V corresponding to first facing portion 62 among one set of V-phase coils 31V corresponding to first facing portion 62 and one set of W-phase coils 31W corresponding to second facing portion 72. Interphase insulator 51 is not provided in other coils (three sets of V-phase coils) except for first facing portion 62 in first coil end 61. Interphase insulator 51 is not provided in the one set of W-phase coils 31W corresponding to second facing portion 72.

As shown in the present modification, the number of coils of the same phase arranged side by side continuously in the circumferential direction of central axis 101 is not particularly limited.

The motor according to the second embodiment of the present invention configured as described above can similarly achieve the effect described in the first embodiment.

When comparing the state in which the coils are mounted in the first embodiment with the state in which the coils are mounted in the second embodiment, the distance between the coils of different phases that are not provided with interphase insulator 51 can be set larger in the state in which the coils are mounted in the first embodiment than in the state in which the coils are mounted in the second embodiment. Further, the number of portions where interphase insulator 51 is provided can be set smaller in the state in which the coils are mounted in the second embodiment than in the state in which the coils are mounted in the first embodiment (when the number of coils of the same phase arranged side by side continuously in the circumferential direction of central axis 101 is three or more).

### (Third Embodiment)

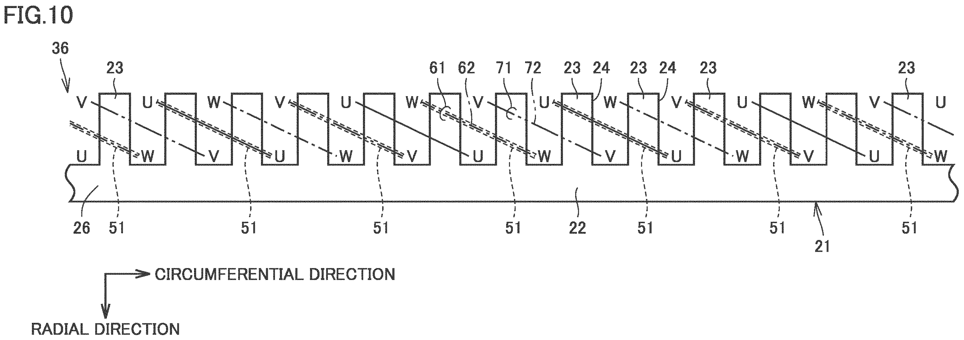

Fig. 10 is a diagram for illustrating the state in which coils are mounted in a motor according to the third embodiment of the present invention. The motor according to the present embodiment has basically the same structure as that of motor 100 according to the first embodiment. In the following, the description of the same structure will not be repeated.

Referring to Fig. 10, in the present embodiment, on end face 26, the coil of each of U-phase coils 31U, V-phase coils 31V, and W-phase coils 31W is provided so as to straddle one slot 24 in the circumferential direction of central axis 101. U-phase coils 31U, V-phase coils 31V, and W-phase coils 31W are arranged in this order repeatedly in the circumferential direction of central axis 101.

In Fig. 10, as a representative example, first coil end 61 corresponds to W-phase coil 31W, and second coil end 71 corresponds to V-phase coil 31V arranged side by side with this W-phase coil 31W in the circumferential direction of central axis 101. First facing portion 62 corresponds to W-phase coil 31W forming first coil end 61, and second facing portion 72 corresponds to V-phase coil 31V forming second coil end 71.

Interphase insulator 51 is provided in W-phase coil 31W corresponding to first facing portion 62 among W-phase coil 31W corresponding to first facing portion 62 and V-phase coil 31V corresponding to second facing portion 72. Interphase insulator 51 is not provided in V-phase coil 31V corresponding to second facing portion 72. The coils each provided with interphase insulator 51 and the coils each not provided with interphase insulator 51 are alternately arranged side by side in the circumferential direction of central axis 101.

The motor according to the third embodiment of the present invention configured as described above can similarly achieve the effect described in the first embodiment.

The number of coils of the same phase that are arranged side by side continuously in the circumferential direction of central axis 101 may be more than one as described in the first and second embodiments or may be one as described in the present embodiment.

It should be understood that the embodiments disclosed herein are illustrative and non-restrictive in every respect. The scope of the present invention is defined by the terms of the claims, rather than the description above, and is intended to include any modifications within the meaning and scope equivalent to the terms of the claims.

### INDUSTRIAL APPLICABILITY

The present invention is applicable, for example, to a motor for a machine tool.

### REFERENCE SIGNS LIST

12 flange, 13 refrigerant passage forming portion, 14 resin sealing portion, 15 collar portion, 16 lead wire, 17 crossover wire, 20 stator, 21 stator core, 22 yoke portion, 23 tooth portion, 24 slot, 26, 26m, 26n end face, 31 three-phase coil, 31U U-phase coil, 31V V-phase coil, 31W W-phase coil, 36 coil end portion, 41 in-slot insulator, 51 interphase insulator, 61 first coil end, 62 first facing portion, 71 second coil end, 72 second facing portion, 100 motor, 101 central axis.

## Claims

1. A motor comprising:
a stator core including
a yoke portion having an annular shape, and
a plurality of tooth portions extending radially from the yoke portion and arranged at a distance from each other in a circumferential direction, the stator core being provided with a slot between the tooth portions adjacent to each other; and
three-phase coils inserted through the slot and wound around each of the tooth portions,
the three-phase coils including a first coil end and a second coil end arranged side by side in a circumferential direction of the stator core, the first coil end and the second coil end being formed of coils of different phases, the coils of different phases protruding from the slot onto an end face of the stator core in an axial direction of the stator core,
the first coil end and the second coil end including a first facing portion and a second facing portion, respectively, that face each other, the motor further comprising:
an interphase insulator provided only on the first facing portion among the first facing portion and the second facing portion, wherein
each of the first coil end and the second coil end is formed of a plurality of coils of the same phase, the coils of the same phase protruding onto the end face from a plurality of the slots arranged side by side continuously in the circumferential direction of the stator core,
the first facing portion corresponds to all of the coils forming the first coil end, and
the second facing portion corresponds to all of the coils forming the second coil end.

2. The motor according to claim 1, wherein a maximum height from the end face to the second facing portion in the axial direction of the stator core is greater than a maximum height from the end face to the first facing portion in the axial direction of the stator core.

3. The motor according to claim 1 or 2, wherein the coils forming each of the first coil end and the second coil end extend in the circumferential direction and a radial direction of the stator core when viewed in the axial direction of the stator core.

4. The motor according to any one of claims 1 to 3, wherein the interphase insulator is an insulating tape wound around each of the coils.
